## Europäisches Patentamt
## European Patent Office
## Office européen des brevets

(19)

(11) Numéro de publication : **0 304 438 B1**

(12) # FASCICULE DE BREVET EUROPEEN

(45) Date de publication du fascicule du brevet :
**27.12.91 Bulletin 91/52**

(51) Int. Cl.⁵ : **B62B 9/28**

(21) Numéro de dépôt : **87907228.8**

(22) Date de dépôt : **26.10.87**

(86) Numéro de dépôt international :
**PCT/FR87/00418**

(87) Numéro de publication internationale :
**WO 88/03103 05.05.88 Gazette 88/10**

(54) **SIEGE AUXILIAIRE PORTE-BEBE.**

(30) Priorité : **24.10.86 FR 8614838**

(43) Date de publication de la demande :
**01.03.89 Bulletin 89/09**

(45) Mention de la délivrance du brevet :
**27.12.91 Bulletin 91/52**

(84) Etats contractants désignés :
**BE CH DE FR GB IT LI NL SE**

(56) Documents cités :
**FR-E- 60 298**
**NL-A- 92 200**
**US-A- 3 079 162**

(73) Titulaire : **TEINTURIER-MILGRAM, Monique**
**50, avenue Caffin**
**F-94210 La-Varenne-Saint-Hilaire (FR)**

(72) Inventeur : **TEINTURIER-MILGRAM, Monique**
**50, avenue Caffin**
**F-94210 La-Varenne-Saint-Hilaire (FR)**

(74) Mandataire : **Sauvage, Renée**
**Cabinet Sauvage 100 bis, avenue de**
**Saint-Mandé**
**F-75012 Paris (FR)**

## Description

La présente invention a pour objet un siège souple auxiliaire susceptible d'être adapté sur une poussette légère pour y recevoir un deuxième enfant en bas âge.

Lorsqu'un adulte seul veut se déplacer avec deux jeunes enfants, l'un pouvant marcher et l'autre non, installé dans une poussette, le jeune enfant marchant se fatigue en général assez rapidement et demande à être porté. Il est alors très difficile et fatiguant pour l'adulte de pousser la poussette et de porter l'enfant le plus grand dans ses bras. Le résultat est donc le plus souvent qu'une personne seule hésite à, voire s'abstient de, sortir avec deux jeunes enfants (car il n'est possible de transporter qu'un seul enfant sur les poussettes légères "type poussette pliante".

La présente invention a pour but de remédier à cette situation en apportant un siège auxiliaire susceptible d'être monté temporairement sur une poussette légère.

Plus précisément, l'invention apporte un siège souple constitué d'un panneau en matériau textile définissant d'une extrémité à l'autre un dossier, une assise et une patte d'entre-jambes, des pièces de maintien latéral étant réunies par deux de leurs côtés adjacents, d'une part, au bord latéral du dossier et, d'autre part, à celui de l'assise.

Un siège souple de ce type est connu d'après US-A-3 079 162. Il comporte une armature métallique propre, par l'intermédiaire de laquelle il est assujetti à différents supports; un siège souple est aussi connu d'après FR-E- 60298

Le siège selon l'invention est dépourvu d'une telle armature métallique propre.

Selon l'invention, le siège comporte, d'une part, une paire de sangles de renforcement d'assise fixées par une de leurs extrémités au panneau au niveau de l'assise et dont les autres extrémités forment moyens d'attache complémentaires, la longueur desdites sangles étant suffisante pour permettre la coopération desdits moyens d'attache côté face externe du dossier, après que le siège ait été placé entre les montants latéraux de guidage d'une poussette légère en arrière de l'assise originale de la poussette et que lesdites sangles aient contourné ces montants permettant le transport d'un deuxième enfant sur la poussette et, d'autre part, une sangle d'entre-jambes fixée en un point intermédiaire de sa longueur à l'extrémité de la patte d'entre-jambes, et dont les deux extrémités forment moyens d'attache complémentaires, la longueur de ladite sangle étant suffisante pour permettre la coopération desdits moyens d'attache côté face externe du dossier, après avoir contourné les montants latéraux de guidage de la poussette et que le dossier est renforcé par des baleines souplés.

Dans une forme d'exécution pratique de l'invention, il est prévu au moins deux passants sur chacun des bords latéraux de la face externe du dossier, lesquels passants sont adaptés à recevoir les sangles.

Dans une forme d'exécution préférée, les deux sangles de la paire de sangles d'assise sont réunies à l'assise obliquement par rapport à l'axe longitudinal du panneau et sont solidarisées en croix à l'assise sur toute la largeur de celle-ci.

Il est avantageusement prévu des moyens de réglage en longueur des sangles.

L'invention sera mieux comprise à la lecture de la description ci-après faite en référence aux dessins annexés.

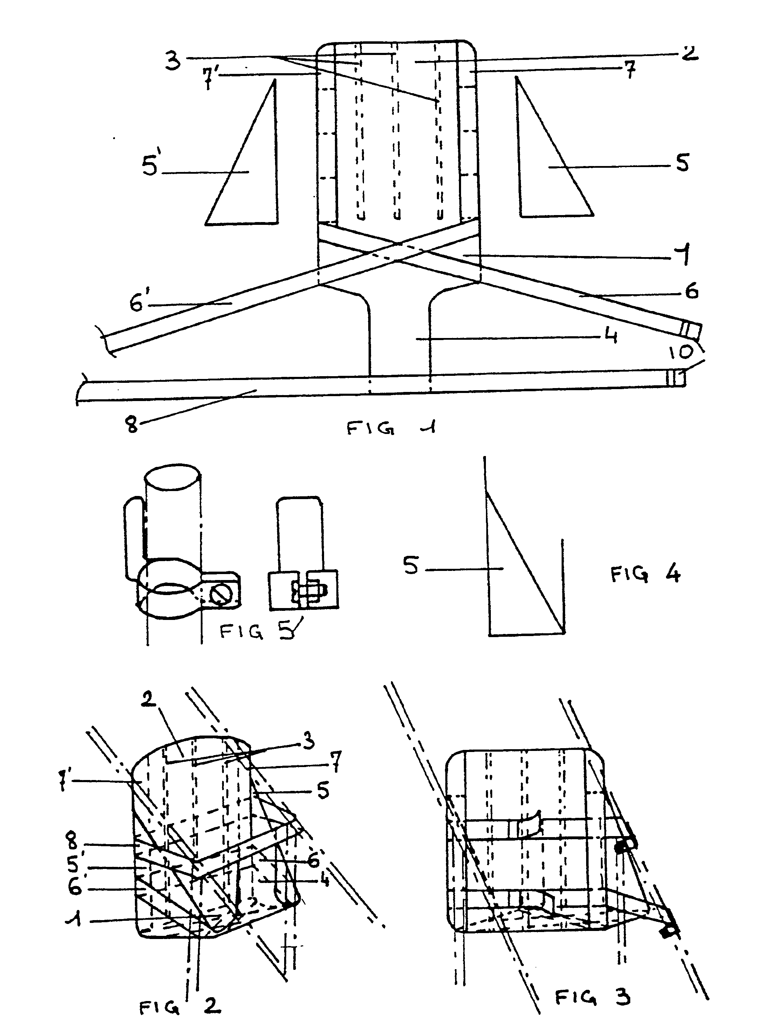

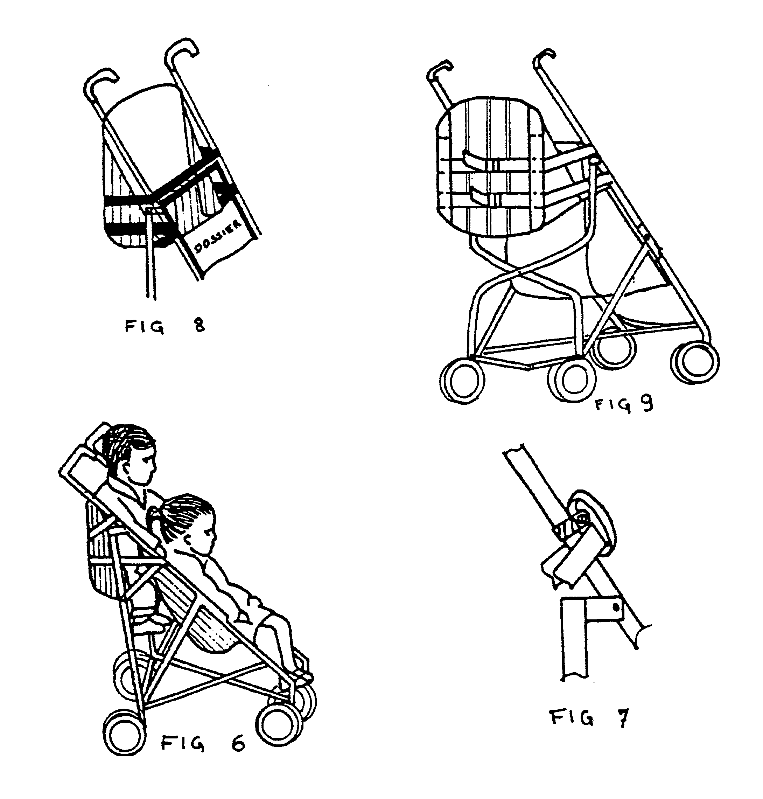

Le siège selon la présente invention, fixé à l'arrière de l'assise originale (fig 6), a pour but de permettre une assise confortable et le transport facile et sans fatigue avec un maximum de sécurité d'un deuxième enfant avec un minimum d'encombrement (très appréciable en ville).

Cette assise est réalisée dans un tissu résistant en double ou simple épaisseur comportant :

   – une assise 1 renforcée par deux sangles 6 et 6' croisées sous la face inférieure

   – un dossier 2 renforcé par des baleines souples 3 et par des sangles latérales 7 et 7' formant passants

   – une butée antérieure 4 échancrée à sa base en forme de "T", une sangle cousue perpendiculairement 8 empêchant l'enfant de glisser vers l'avant et latéralement, le maintenant donc en selle

   – deux triangles de toile latéraux 5 et 5' assurent la forme et le maintien de cette assise (solidarisés de part et d'autre par un système de coutures et de surpiqûres, fig 4)

   – un système de sangles (6, 6' ; 8) en nylon ou autre matériau d'une résistance suffisante vont venir stabiliser et renforcer l'appareil, l'assise et la région para-vertébrale de l'enfant, améliorer sa tenue et permettre la fixation et le réglage de cette assise selon la taille de l'enfant et le modèle de la poussette à l'aide de passants constitués par les sangles (7, 7') montant de part et d'autre du dossier et cousus à intervalles réguliers sur celui-ci.

Chaque extrémité de sangles est munie de boucles 10 ou de systèmes équivalents se rejoignant et permettant ainsi de maintenir les réglages souhaités.

Comme il va de soi, l'invention ne se limite pas à une seule taille, à un seul type de toile, de sangles ou autre matériau et à quelques variantes de réglages et de jointements terminaux des sangles. Au contraire toutes les variantes de matériau et de disposition des pièces les unes par rapport aux autres sont possibles ainsi que l'adjonction de sangles supplémentaires pour l'adaptation à des modèles divers de poussettes.

Pour éviter tout risque de déséquilibre il est conseillé de mettre d'abord un enfant dans l'assise originale de la poussette et ensuite l'autre enfant dans le siège selon l'invention qui est fixé sur les montants de la poussette en arrière de l'assise originale.

Il est aussi conseillé de ne pas mettre dans le siège selon l'invention un trop jeune enfant qui ne peut médicalement supporter une position de la colonne vertébrale verticale trop longtemps.

Le siège selon l'invention peut être adapté aux différents types de poussettes à l'aide de crochets ou de clips supplémentaires (fig 5 et fig 7) fixés sur les montants arrière de la poussette, en arrière de l'assise originale ainsi qu'utiliser des sangles supplémentaires.

Les différents éléments du siège sont assemblés entre eux au moyen de coutures et de surpiqûres.

La fig 8 représente l'installation de l'invention à l'arrière de l'assise originale de la poussette.

La fig 9 représente le siège selon l'invention vu de 3/4 arrière.

## Revendications

1. Siège souple pour enfant en bas âge, constitué d'un panneau en matériau textile définissant d'une extrémité à l'autre un dossier (2), une assise (1) et une patte d'entre-jambes (4) des pièces (5) de maintien latéral étant réunies par deux de leurs côtés adjacents, d'une part, au bord latéral du dossier (2) et, d'autre part, à celui de l'assise (1), caractérisé en ce que le siège comporte, d'une part, une paire de sangles de renforcement d'assise (6, 6') fixées par une de leurs extrémités au panneau au niveau de l'assise (1) et dont les autres extrémités forment moyens d'attache complémentaires (10, 11), la longueur desdites sangles (6, 6') étant suffisante pour permettre la coopération desdits moyens d'attache (10) côté face externe du dossier (2) après que le siège ait été placé entre les montants latéraux de guidage d'une poussette légère en arrière de l'assise originale de la poussette et que lesdites sangles (6, 6') aient contourné ces montants permettant le transport d'un deuxième enfant et, d'autre part, une sangle d'entre-jambes (8) fixée en un point intermédiaire de sa longueur à l'extrémité de la patte d'entre-jambes (4), et dont les deux extrémités forment moyens d'attache complémentaires (10), la longueur de ladite sangle (12) étant suffisante pour permettre la coopération desdits moyens d'attache côté face externe du dossier (2) après avoir contourné les montants latéraux de guidage de la poussette et que le dossier est renforcé par des baleines souples (3).

2. Siège selon la revendication 1, caractérisé en ce qu'il est prévu au moins deux passants (7, 7') sur chacun des bords latéraux de la face externe du dossier (2), lesquels passants (7, 7') sont adaptés à recevoir les sangles d'assise (6, 6').

3. Siège selon la revendication 1 ou 2, caractérisé en ce que les deux sangles (6, 6') de la paire de sangles d'assise sont réunies à l'assise (1) obliquement par rapport à l'axe longitudinal du panneau et sont solidarisées en croix à l'assise (1) sur toute la largeur de celle-ci.

4. Siège selon l'une quelconque des revendications 1 à 3 caractérisé en ce qu'il est prévu des moyens de réglage (10) en longueur des sangles (6, 6' ; 8).

5. Siège selon l'une quelconque des revendications 1 à 4, caractérisé en ce que les éléments sont assemblés au moyen de surpiqûres.

6. Siège selon l'une quelconque des revendications 1 à 5 avec accessoire en forme de crochet ou clip susceptible de venir enserrer chacun des montants latéraux de guidage d'une poussette (figures 5 et 7) pour aider à fixer le siège aux différents types de poussette en arrière de l'assise originale.

7. Poussette équipée d'un siège selon l'une quelconque des revendications 1 à 6.

## Patentansprüche

1. Weicher Sitz für Kleinkind, gebildet aus einer Fläche aus Stoffmaterial, das von einem zum anderen Ende eine Rückenlehne (2), einen Sitz (1) und eine Zwischenbeinlasche (4) definiert, wobei seitliche Haltestücke (5) durch zwei ihrer benachbarten Seiten verbunden sind, einerseits mit dem Seitenrand der Rückenlehne (2) und andererseits mit jenem des Sitzes (1), dadurch gekennzeichnet, daß der Sitz aufweist, einerseits ein Paar von Sitzverstärkungsgurten (6, 6'), die mit einem ihrer Enden an der Fläche auf der Höhe des Sitzes (1) befestigt sind und deren andere Enden komplementäre Festhalteeinrichtungen (10, 11) bilden, wobei die Länge der Gurte (6, 6') ausreichend ist, um das Zusammenwirken der Festhalteeinrichtung (10) auf der Außenseite der Rückenlehne (2) zu erlauben, nachdem der Sitz zwischen die seitlichen Führungsstützen eines leichten Kinderwagens hinter den Originalsitz des Kinderwagens gesetzt wurden, und daß die Gurte (6, 6') diese Stützen umgeben, was den Transport eines zweiten Kindes erlaubt, und andererseits einen Zwischenbeingurt (8), der in einem Zwischenpunkt seiner Länge mit dem Ende der Zwischenbeinlasche (4) verbunden ist, und von dem die zwei Enden komplementäre Festhalteeinrichtungen (10) bilden, wobei die Länge des Gurtes (12) ausreicht, um das Zusammenwirken der Festhalteeinrichtungen auf der Außenseite der Rückenlehne (2) zu erlauben, nachdem die seitlichen Führungsstützen des Kinderwagens umschlungen wurden, und daß die Rückenlehne durch biegsame Stäbchen (3) verstärkt ist.

2. Sitz nach Anspruch 1, dadurch gekennzeichnet, daß wenigstens zwei Durchgänge (7, 7') auf jedem Seitenrand der Auffenseite der Rückenlehne (2) vorgesehen sind, wobei die Durchgänge (7, 7') dazu dienen, die Sitzgurte (6, 6') aufzunehmen.

3. Sitz nach Anspruch 1 oder 2, **dadurch gekennzeichnet**, daß die beiden Gurte (6, 6') des Sitzgurtpaares mit dem Sitz (1) schräg bezüglich der Längsachse der Fläche verbunden sind, und kreuzförmig mit dem Sitz (1) über die gesamte Breite von diesem verbunden sind.

4. Sitz nach einem der Ansprüche 1 bis 3, **dadurch gekennzeichnet**, daß Einstelleinrichtungen (10) der Länge der Gurte (6, 6'; 8) vorgesehen sind.

5. Sitz nach einem der Ansprüche 1 bis 4, **dadurch gekennzeichnet**, daß die Elemente mittels Übernähten zusammengesetzt sind.

6. Sitz nach einem der Ansprüche 1 bis 5, mit Zusatz in Form eines Hakens oder einer Klammer, geeignet, jede seitliche Führungsstütze eines Kinderwagens einzuklemmen (Fig. 5 und 7), um zu helfen, den Sitz an unterschiedlichen Kinderwagentypen hinter dem "Originalsitz" zu befestigen.

7. Kinderwagen, ausgerüstet mit einem Sitz nach einem der Ansprüche 1 bis 6.


## Claims

1. A flexible seat for infant, comprising a panel of textile material defining, from one end to the other, a backrest (2), a seat portion (1), and a crotch flap (4), lateral maintaining parts (5) being connected by two of their adjacent sides to the lateral edge of the backrest (2), on the one hand, and to that of the seat portion (1), on the other hand, characterized in that the seat comprises, on the one hand, a pair of reinforcing seatbelts (6,6') secured at one of their ends to the panel, at the seat portion level (1), their other ends forming mutually interconnecting means (10,11), said belts (6,6') being long enough for allowing said interconnecting means (10) to cooperate along the outside face of the backrest (2), once the seat has been placed between the upright lateral handles of a child's stroller, backwards the original seat of the stroller, and once said belts (6,6') have been passed around these handles, allowing the transportation of a second child, and, on the other hand, a crotch belt (8) affixed at a point on its length to the end of the crotch flap (4) and of which both ends form mutually interconnecting means (10), this belt being long enough for allowing said interconnecting means to cooperate along the outside face of the backrest (2), after having been passed around the upright lateral handles of the stroller, the backrest being reinforced by flexible stays.

2. A seat according to claim 1, characterized in that at least two loops (7,7') are provided on each marginal portion of the outer face of the backrest (2) which loops (7,7') are adapted to accommodate the seat belts (6,6').

3. A seat according to claim 1 or 2, characterized in that the two belts (6,6') of the pair of seatbelts are secured to the seat portion, obliquely in regards to the longitudinal axis of the panel and are affixed crosswise to the seat portion (1) along the entire width of said portion.

4. A seat according to anyone of claims 1 to 3, characterized in that means (10) are provided for adjusting the length of the belts (6,6';8).

5. A seat according to anyone of claims 1 to 4, characterized in that the parts are fitted together by heavy stitching.

6. A seat according to anyone of claims 1 to 5 provided with a hook-or clip-shaped fittings, each adapted to grip around each upright lateral handle provided for guiding a stroller (figures 5 and 7) to facilitate the mounting of the seat on various types of stroller backwards the original seat.

7. A stroller equipped of the seat according to claim 1.

FIG 1

FIG 5

FIG 4

FIG 2

FIG 3

FIG 8

FIG 9

FIG 6

FIG 7